# EUROPEAN PATENT SPECIFICATION

(11) **EP 3 935 304 B1**
(45) Date of publication and mention of the grant of the patent: **15.02.2023**
(21) Application number: 19712252.6
(22) Date of filing: 06.03.2019
(51) Int. Cl.: F16N 13/16, F16N 13/02, F01M 5/00, F01L 1/344, F01M 5/02

(54) **PUMP MODULE AND PISTON ENGINE**
PUMPENMODUL UND KOLBENMOTOR
MODULE DE POMPE ET MOTEUR À PISTON

(43) Date of publication of application: 12.01.2022
(73) Proprietor: Wärtsilä Finland Oy, 65170 Vaasa (FI)
(72) Inventor: LAURILA, Aki Matti, 65100 VAASA (FI)
(74) Representative: Berggren Oy
(86) International application number: PCT/FI2019/050177
(87) International publication number: WO 2020/178473

(56) References cited:
- EP-A2- 0 890 781
- EP-B1- 0 890 781
- CN-A- 108 049 932
- RU-C2- 2 263 214
- US-A- 4 199 950

## Description

### Technical field of the invention

The present invention relates to a pump module for pressurizing control oil of a piston engine for enabling a black start of the engine, as defined in claim 1. The invention also concerns a piston engine comprising such a pump module.

### Background of the invention

In many applications, black start capability of a piston engine is required. The term "black start" refers to a situation, where an engine is started without a connection to an external power grid. Black start may be needed, for instance, in ships or at power plants. In some cases, an emergency generator may be used for supplying the energy needed for starting the engine. However, in many cases the engine needs to be started using stored energy. Usually the energy is stored in the form of compressed air. The stored energy may be needed for various purposes, such as for rotating the crankshaft of the engine, for fuel supply and for supplying lubricating oil and control oil for critical components of the engine.

US4199950 A describes an example of a system for supplying lubricating oil before the start of an engine.

### Summary of the invention

An object of the present invention is to provide an improved pump module for pressurizing control oil of a piston engine for enabling a black start of the engine. The characterizing features of the pump module according to the invention are given in claim 1.

The pump module according to the invention comprises a body having a first connection surface facing a first direction and a second connection surface facing a second direction opposite to the first direction, wherein the first connection surface is configured to be connected to an oil sump or a lubricating oil tank of the engine and the second connection surface is configured to be connected to an oil pipe of a lubricating oil system of the engine, the body comprising a through-hole, the wall of the through-hole defining an oil channel for allowing oil flow between the oil pipe and the oil sump or the lubricating oil tank, a pump chamber for pressurizing the control oil, a fluid channel for establishing fluid communication between the oil channel and the pump chamber and for allowing flow from the oil channel into the pump chamber, a check valve that is arranged between the oil channel and the pump chamber for preventing flow from the pump chamber into the oil channel, an outlet for discharging pressurized control oil from the pump module, an actuation chamber that is coaxial with the pump chamber, an inlet for introducing pressure medium into the actuation chamber, and a piston device having a first piston surface delimiting the pump chamber and a second piston surface delimiting the actuation chamber, wherein the pump module is configured to pressurize the oil in the pump chamber by means of the movement of the piston device, when pressure is applied on the second piston surface of the piston device.

With the pump module according to the invention, the control oil needed for a black start can be taken directly from the lubricating oil flow of the engine. The pump module can be attached to an oil sump or to a separate lubricating oil tank. The pump module can thus be more easily located into an engine room, where the available space is limited. Only minor changes to the piping of the lubricating oil system is needed. During normal operation and start of the engine, lubricating oil flows through the pump module and the pump chamber is kept filled with oil, which is immediately available in a black out situation.

According to an embodiment of the invention, the pump module comprises a spring for biasing the piston device towards a position allowing maximal amount of oil in the pump chamber.

According to an embodiment of the invention, the pump module comprises a check valve that is arranged between the pump chamber and the outlet for preventing flow from the outlet to the pump chamber.

According to an embodiment of the invention, the fluid channel is arranged within the body of the pump module.

According to an embodiment of the invention, the actuation chamber is configured to receive compressed air.

According to an embodiment of the invention, the pump module comprises at least two pump chambers and actuation chambers.

According to an embodiment of the invention, the body is a one-piece part.

According to an embodiment of the invention, the pump chamber and the actuation chamber are arranged within the body of the pump module.

According to an embodiment of the invention, the pump chamber and the actuation chamber are arranged in a separate sub-module attached to the body of the pump module.

A piston engine according to the invention comprises a pump module defined above.

According to an embodiment of the invention, the engine comprises an oil sump and the pump module is arranged at an end of the oil sump.

According to an embodiment of the invention, a return line for lubricating oil from a turbocharger is connected to the second connection surface of the pump module.

According to an embodiment of the invention, a flange is arranged between the pump module and the oil sump.

### Brief description of the drawings

Embodiments of the invention are described below in more detail with reference to the accompanying drawings, in which
Fig. 1 shows schematically a lubricating oil system of a piston engine,
Fig. 2 shows a pump module according to an embodiment of the invention,
Fig. 3 shows the pump module of figure 2 in connection with an oil sump of an engine,
Fig. 4 shows a cross-sectional view of the pump module of figure 2,
Fig. 5 shows a cross-sectional view of the pump module of figure 2 from another direction, and
Fig. 6 shows a pump module according to another embodiment of the invention in connection with an oil sump of an engine.

### Description of embodiments of the invention

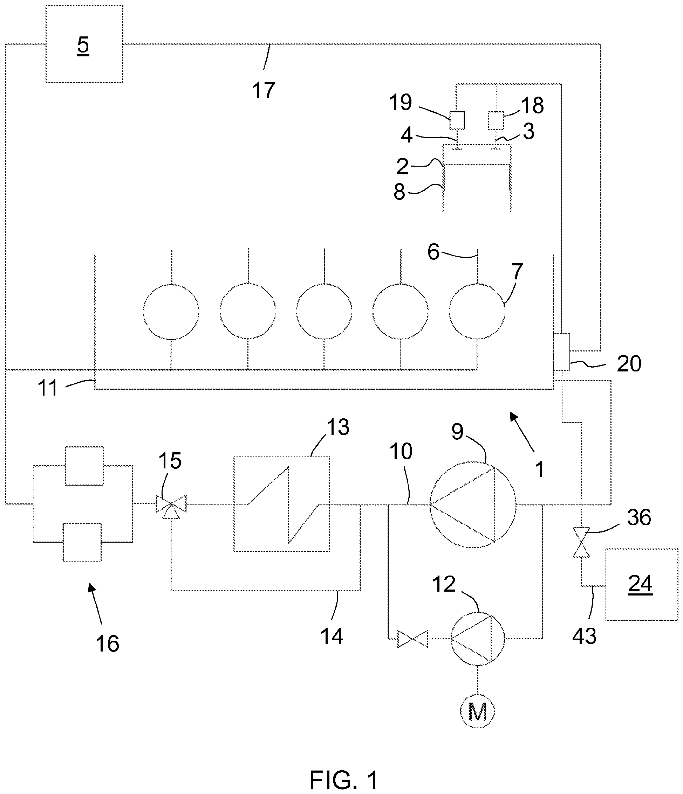

Figure 1 shows schematically a simplified illustration of a lubricating oil system of a piston engine 1. The engine 1 is a large internal combustion engine, such as a main or an auxiliary engine of a ship or an engine that is used at a power plant for producing electricity. The cylinder bore of the engine is at least 150 mm. The rated power of the engine is at least 150 kW per cylinder.

The engine 1 comprises a plurality of cylinders 2, of which only one is shown in figure 1. The engine 1 of figure 1 is a four-stroke engine. Each cylinder 2 of the engine 1 is provided with at least one intake valve 3 and with at least one exhaust valve 4, which can be referred to as gas exchange valves 3, 4. The engine 1 is also provided with at least one turbocharger 5. Each cylinder 2 of the engine 1 is provided with a piston 8, which is connected to a crankshaft and configured to move in a reciprocating manner within the cylinder 2.

The lubricating oil system is configured to deliver lubricating oil to components of the engine 1 for lubrication and/or cooling purposes. The lubricating oil system supplies lubricating oil for instance via big end bearings 7 of the engine 1 to connecting rods 6. Inside the connecting rods 6, lubricating oil is supplied to the pistons 8 of the engine, where the lubricating oil is used for lubricating the piston rings and/or for cooling the piston 8.

The lubricating oil system comprises an oil pump 9, which pressurizes the lubricating oil and feeds it into a lubricating oil line 10, in which the lubricating oil is conducted to the components where the lubricating oil is used. In the example of figure 1, the engine 1 is provided with a wet oil sump 11. A wet sump is an oil sump, which functions as an oil reservoir for the engine 1. In the lubricating oil system of figure 1, the lubricating oil is taken from the oil sump 11 of the engine 1. However, the engine 1 could also be provided with a dry oil sump and with a separate lubricating oil tank, into which the lubricating oil is introduced from the oil sump. The lubricating oil could thus be taken from the separate lubricating oil tank. The oil pump 9 is driven by the engine. However, the oil pump 9 could also be driven by some other power source, such as an electric motor. The oil pump 9 can be for example a screw pump. The lubricating oil system is also provided with a prelubricating pump 12, which ensures that lubricating oil flow is available also when the engine 1 is started. The prelubricating pump 12 is arranged in parallel with the oil pump 9. The prelubricating pump 12 is electrically driven.

An oil cooler 13 is arranged downstream from the oil pump 9 for cooling the pressurized lubricating oil. A by-pass duct 14 is arranged in parallel with the oil cooler 13 for allowing bypassing of the oil cooler 13 when the lubricating oil temperature is low, for instance when the engine 1 is started. A by-pass valve 15 connects the by-pass line 14 to the lubricating oil line 10 on the downstream side of the oil cooler 13. The by-pass valve 15 is used for selectively guiding the lubricating oil flow from the oil pump 9 either through the oil cooler 13 or through the by-pass line 14. The by-pass valve 15 can be temperature-controlled for automatically keeping the lubricating oil temperature within the appropriate temperature range. A filter 16 is arranged downstream from the by-pass valve 15.

Lubricating oil is also supplied to the turbocharger 5. A return line 17 supplies lubricating oil from the turbocharger 5 back to the oil sump 11.

The engine 1 is provided with a variable intake valve closing (VIC) system 18 and with a variable exhaust valve closing (VEC) system 19. The lubricating oil is used as control oil for operating the VIC system 18 and the VEC system 19. Variable timing of the gas exchange valves 3, 4 allows the closing timing of the intake valves 3 and the exhaust valves 4 to be adjusted according to the operating conditions of the engine 1. The gas exchange valves 3, 4 may be either hydraulically actuated or cam-actuated. In case of cam-actuated gas exchange valves 3, 4, the control oil can be used for example to delay the closing of the valves 3, 4 from a timing determined by a cam.

To ensure proper functioning of the VIC/VEC systems 18, 19, pressurized control oil needs to be available when the engine 1 is started. Prior to normal start of the engine 1, the electrically driven prelubricating pump 12 supplies pressurized oil also to the VIC/VEC systems 18, 19. However, in case of a black start situation, where the engine 1 needs to be started without supply of electrical energy, the control oil needs to be supplied to the VIC/VEC systems 18, 19 without relying on the prelubricating pump 12. For allowing supply of pressurized control oil to the VIC system 18 and/or to the VEC system 19 prior to black start, the lubricating oil system is provided with a pump module 20. The pump module 20 receives oil from the lubricating oil system and supplies it to the VIC/VEC systems 18, 19. In the embodiment of figure 1, the pump module 20 is attached to the oil sump 11.

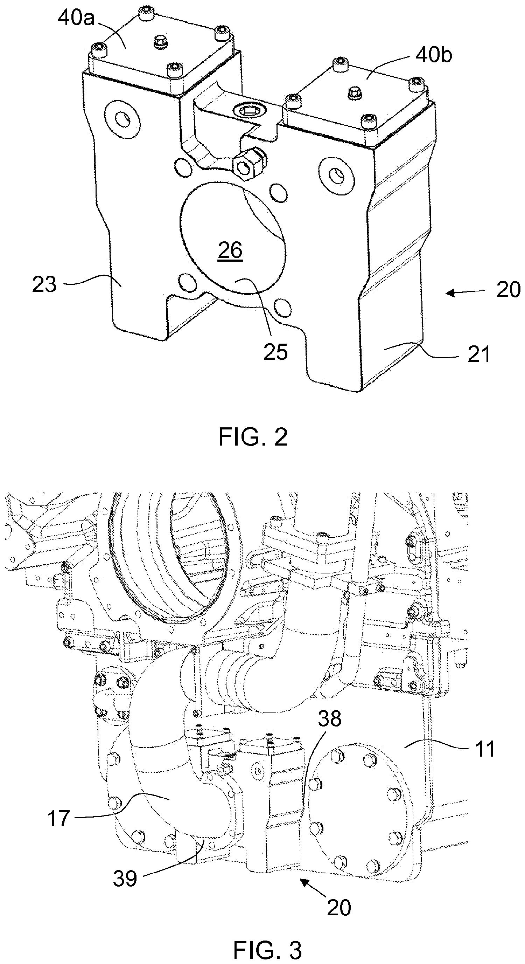

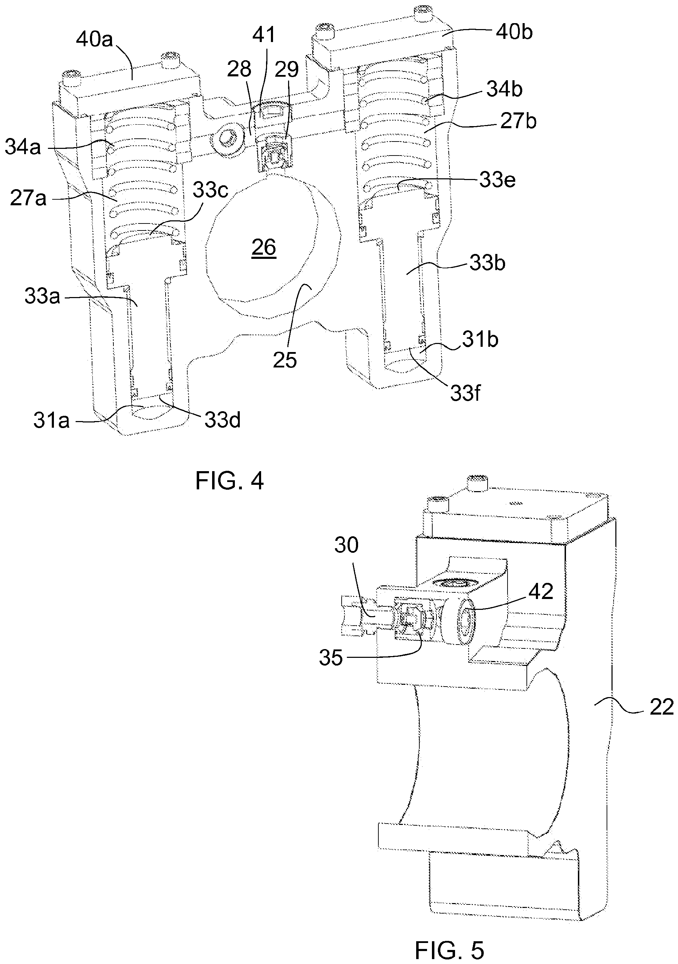

Figure 2 shows a pump module 20 according to an embodiment of the invention. Figure 3 shows the pump module 20 of figure 2 connected to an oil sump 11 of an engine. Figures 4 and 5 show two different cross-sectional views of the pump module 20. The pump module 20 comprises a body 21. The body 21 has a first connection surface 22 and a second connection surface 23. The first connection surface 22 is configured to face the oil sump 11 or alternatively a lubricating oil tank. The second connection surface 23 is configured to face an oil pipe 17. In the embodiment of figure 3, the oil pipe 17 is the return line, which supplies lubricating oil from the turbocharger 5 to the oil sump 11. The second connection surface 23 is parallel with the first connection surface 22. The first connection surface 22 and the second connection surface 23 face opposite directions. The second connection surface 23 faces away from the first connection surface 22.

The body 21 of the pump module 20 comprises a through hole 25. The wall of the through hole 25 defines an oil channel 26. The oil channel 26 establishes fluid communication between the oil sump 11 and the oil pipe 17. The oil channel 26 thus allows flow from the oil pipe 17 into the oil sump 11.

The pump module 20 according to the invention comprises at least one pump chamber 27a, 27b. In the embodiment of figures 2-5, the pump module 20 comprises a first pump chamber 27a and a second pump chamber 27b. The pump chambers 27a, 27b can be used for pressurizing control oil that is needed for a black start of the engine. The number of the pump chambers 27a, 27b can be chosen according to the required flow rate of control oil. A fluid channel 28 connects each of the pump chambers 27a, 27b to the oil channel 26. In the embodiment of figures 2-5, the fluid channel 28 is T-shaped and comprises a first branch extending outwards from the oil channel 26 and a second branch that connects the first pump chamber 27a and the second pump chamber 27b to the first branch. The pump chambers 27a, 27b can thus receive lubricating oil from the oil channel 26. The fluid channel 28 is provided with a check valve 29, which allows flow from the oil channel 26 into the pump chambers 27a, 27b, but prevents flow from the pump chambers 27a, 27b into the oil channel 26. The check valve 29 is located behind a plug 41, which allows service of the check valve 29. The pump module 20 comprises an outlet 30, through which control oil can be discharged from the pump module 20. In the embodiment of figures 2-5, the pump module 20 is provided with a check valve 35, which allows discharging of oil from the pump module 20 via the outlet 30, but prevents flow from the outlet 30 into the pump chambers 27a, 27b. However, the check valve 35 does not need to be an integral part of the pump module 20, but the check valve could be arranged in a control oil line downstream from the outlet 30. The check valve 35 is located behind a plug 42, which allows service of the check valve 35. In the embodiment of figures 2-5, the pump module 20 is provided with an outlet 30 that is common to both pump chambers 27a, 27b, but each pump chamber 27a, 27b could be provided with an own outlet. The second branch of the fluid channel 28 connects the outlet 30 to the pump chambers 27a, 27b.

The pump module 20 is further provided with a first actuation chamber 31a, which is coaxial with the first pump chamber 27a, and with a second actuation chamber 31b, which is coaxial with the second pump chamber 27b. The number of the actuation chambers 31a, 31b thus corresponds to the number of the pump chambers 27a, 27b.

The pump module 20 comprises a first piston device 33a for the first pump chamber 27a and the first actuation chamber 31a and a second piston device 33b for the second pump chamber 27b and the second actuation chamber 31b. Each piston device 33a, 33b comprises a first piston surface 33c, 33e, which delimits a pump chamber 27a, 27b, and a second piston surface 33d, 33f, which delimits an actuation chamber 31a, 31b. The first piston surface 33c, 33e and the second piston surface 33d, 33f face opposite directions, i.e. away from each other. The pump module 20 comprises an inlet (not shown in figures 2-5) for introducing pressure medium into the first actuation chamber 31a and into the second actuation chamber 31b.

The pump module 20 comprises for each piston device 33a, 33b a spring 34a, 34b. The spring 34a, 34b is configured to bias the piston device 33a, 33b towards a position, where the volume of the pump chamber 27a, 27b is maximal and the volume of the actuation chamber 31a, 31b is minimal. In the embodiment of figures 2-4, each spring 34a, 34b is arranged within a pump chamber 27a, 27b.

The piston device 33a, 33b is movable in a reciprocating manner. When fluid pressure that is sufficient to overcome the spring force of the spring 34a, 34b is applied onto the second piston surface 33d, 33f of the the piston device 33a, 33b, the piston device 33a, 33b moves and the oil in the pump chamber 27a, 27b is pressurized by the first piston surface 33c, 33e. The pressurized oil is discharged from the pump module 20 via the fluid channel 28 and the outlet 30.

The pump module 20 is connected to a pressure medium source 24 by means of a pressure medium line 43, which is shown in figure 1. A valve 36 is arranged between the pressure medium source 24 and the pump module 20 for controlling flow of pressure medium from the pressure medium source 24 into the actuation chambers 31a, 31b of the pump module 20. The pressure medium source 24 can be an air tank and the pressure medium can thus be compressed air. Because compressed air is often used for starting large piston engines, it is beneficial to use compressed air as the pressure medium. However, also hydraulic fluid stored in a pressure accumulator could be used as the pressure medium. The pressure medium is introduced simultaneously into both actuation chambers 31a, 31b.

In the embodiment of figure 3, the oil sump 11 is provided with a flange 38, to which the pump module 20 is attached. The oil pipe 17 is provided with a flange 39 allowing the oil pipe 17 to be attached to the pump module 20. The pump module 20 is attached to an end of the oil sump 11 outside of the oil sump 11.

In the embodiment of figures 2-5, the body 21 of the pump module 20 is a one-piece part. The pump chambers 27a, 27b and the actuation chambers 31a, 31b are integrated into the body 20, i.e. the pump chambers and the actuation chambers are arranged within the body 21. Each pump chamber 27a, 27b is provided with a removable cover 40a, 40b, which allows inserting the piston device 33a, 33b and the spring 34a, 34b into the body 21.

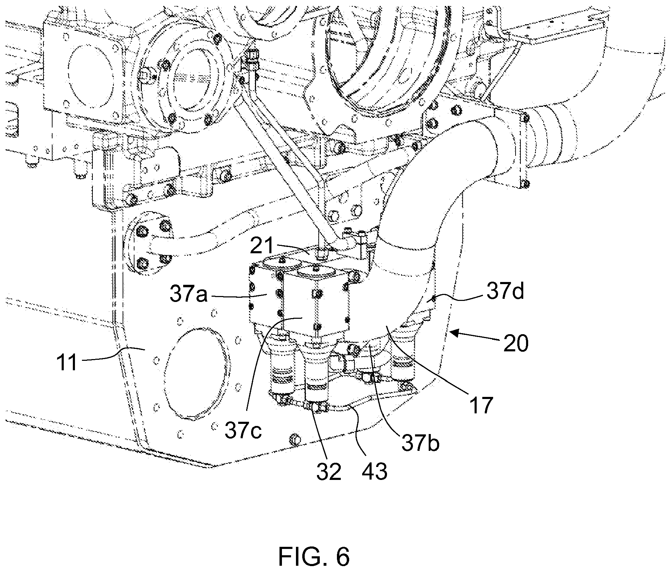

Figure 6 shows a pump module 20 according to another embodiment of the invention. The pump module 20 is attached between an oil sump 11 and an oil pipe 17 in the same way as in the embodiment of figures 2-5. However, the pump module of figure 6 comprises four pump chambers and actuation chambers. The pump module 20 of figure 6 comprises four sub-modules 37a, 37b, 37c, 37d that are attached to the body 21 of the pump module 20. Each of the sub-modules 37a, 37b, 37c, 37d comprises a pump chamber and a corresponding actuation chamber. A pressure medium line 43 is connected to the inlet 32 of each actuation chamber for supplying pressure medium to the actuation chambers. By arranging the pump chambers and actuation chambers in removable sub-modules, the number and/or the size of the pump chambers and the actuation chambers can be varied. This allows a suitable configuration with the desired flow rate to be chosen for each engine.

It will be appreciated by a person skilled in the art that the invention is not limited to the embodiments described above, but may vary within the scope of the appended claims.

## Claims

1. A pump module (20) for pressurizing control oil of a piston engine (1) for enabling a black start of the engine (1), the pump module (20) comprising
- a body (21) having a first connection surface (22) facing a first direction and a second connection surface (23) facing a second direction opposite to the first direction, wherein the first connection surface (22) is configured to be connected to an oil sump (11) or a lubricating oil tank of the engine (1) and the second connection surface (23) is configured to be connected to an oil pipe (17) of a lubricating oil system of the engine (1), the body (21) comprising a through-hole (25), the wall of the through-hole (25) defining an oil channel (26) for allowing oil flow between the oil pipe (17) and the oil sump (11) or the lubricating oil tank,
- a pump chamber (27a, 27b) for pressurizing the control oil,
- a fluid channel (28) for establishing fluid communication between the oil channel (26) and the pump chamber (27a, 27b) and for allowing flow from the oil channel (26) into the pump chamber (27a, 27b),
- a check valve (29) that is arranged between the oil channel (26) and the pump chamber (27a, 27b) for preventing flow from the pump chamber (27a, 27b) into the oil channel (26),
- an outlet (30) for discharging pressurized control oil from the pump module (20),
- an actuation chamber (31a, 31b) that is coaxial with the pump chamber (27a, 27b),
- an inlet (32) for introducing pressure medium into the actuation chamber (31a, 31b), and
- a piston device (33a, 33b) having a first piston surface (33c, 33e) delimiting the pump chamber (27a, 27b) and a second piston surface (33d, 33f) delimiting the actuation chamber (31a, 31b),
wherein the pump module (20) is configured to pressurize the oil in the pump chamber (27a, 27b) by means of the movement of the piston device (33a, 33b), when pressure is applied on the second piston surface (33d, 33f) of the piston device (33a, 33b).

2. A pump module according to claim 1, wherein the pump module (20) comprises a spring (34a, 34b) for biasing the piston device (33a, 33b) towards a position allowing maximal amount of oil in the pump chamber (27a, 27b).

3. A pump module according to claim 1 or 2, wherein the pump module (20) comprises a check valve (35) that is arranged between the pump chamber (27a, 27b) and the outlet (30) for preventing flow from the outlet (30) to the pump chamber (27a, 27b).

4. A pump module (20) according to any of claims 1 to 3, wherein the fluid channel (28) is arranged within the body (21) of the pump module (20).

5. A pump module (20) according to any of the preceding claims, wherein the actuation chamber (31a, 31b) is configured to receive compressed air.

6. A pump module (20) according to any of the preceding claims, wherein the pump module (20) comprises at least two pump chambers (27a, 27b) and actuation chambers (31a, 31b).

7. A pump module (20) according to any of the preceding claims, wherein the body (21) is a one-piece part.

8. A pump module (20) according to any of the preceding claims, wherein the pump chamber (27a, 27b) and the actuation chamber (31a, 31b) are arranged within the body (21) of the pump module (20).

9. A pump module (20) according to any of the preceding claims, wherein the pump chamber (27a, 27b) and the actuation chamber (31a, 31b) are arranged in a separate sub-module (37a, 37b, 37c, 37d) attached to the body (21) of the pump module (20).

10. A piston engine (1) comprising a pump module (20) according to any of the preceding claims.

11. A piston engine (1) according to claim 10, wherein the engine (1) comprises an oil sump (11) and the pump module (20) is arranged at an end of the oil sump (11).

12. A piston engine (1) according to claim 10 or 11, wherein a return line (17) for lubricating oil from a turbocharger (5) is connected to the second connection surface (23) of the pump module (20).

13. A piston engine (1) according to any of claims 10-12, wherein a flange (38) is arranged between the pump module (20) and the oil sump (11).

## Patentansprüche

1. Pumpenmodul (20) zur Druckbeaufschlagung von Steueröl eines Kolbenmotors (1) zur Ermöglichung eines Schwarzstarts des Motors (1), wobei das Pumpenmodul (20) Folgendes umfasst
- einen Körper (21) mit einer ersten Verbindungsfläche (22), die einer ersten Richtung zugewandt ist, und einer zweiten Verbindungsfläche (23), die einer zweiten Richtung entgegengesetzt zur ersten Richtung zugewandt ist, wobei die erste Verbindungsfläche (22) konfiguriert ist, um mit einer Ölwanne (11) oder einem Schmieröltank des Motors (1) verbunden zu werden und die zweite Verbindungsfläche (23) konfiguriert ist, um mit einer Ölleitung (17) eines Schmierölsystems des Motors (1) verbunden zu werden, wobei der Körper (21) ein Durchgangsloch (25) umfasst, wobei die Wand des Durchgangslochs (25) einen Ölkanal (26) definiert, um einen Ölfluss zwischen der Ölleitung (17) und der Ölwanne (11) oder der Schmieröltank zu ermöglichen,
- eine Pumpenkammer (27a, 27b) zur Druckbeaufschlagung des Steueröls,
- einen Fluidkanal (28) zum Herstellen einer Fluidverbindung zwischen dem Ölkanal (26) und der Pumpenkammer (27a, 27b) und zum Ermöglichen einer Strömung von dem Ölkanal (26) in die Pumpenkammer (27a, 27b),
- ein zwischen dem Ölkanal (26) und der Pumpenkammer (27a, 27b) angeordnetes Rückschlagventil (29) zum Verhindern einer Strömung aus der Pumpenkammer (27a, 27) in den Ölkanal (26),
- einen Auslass (30) zum Abführen von unter Druck stehendem Steueröl aus dem Pumpenmodul (20),
- eine zur Pumpenkammer (27a, 27b) koaxiale Betätigungskammer (31a, 31b),
- einen Einlass (32) zum Einführen von Druckmedium in die Betätigungskammer (31a, 31b), und
- eine Kolbeneinrichtung (33a, 33b) mit einer die Pumpenkammer (27a, 27b) begrenzenden ersten Kolbenfläche (33c, 33e) und einer die Betätigungskammer (31a, 31b) begrenzenden zweiten Kolbenfläche (33d, 33f),
wobei das Pumpenmodul (20) konfiguriert ist, um das Öl in der Pumpenkammer (27a, 27b) mittels der Bewegung der Kolbenvorrichtung (33a, 33b) bei Druckbeaufschlagung der zweiten Kolbenfläche (33d, 33f) der Kolbeneinrichtung (33a, 33b) unter Druck zu setzen.

2. Pumpenmodul nach Anspruch 1, wobei das Pumpenmodul (20) eine Feder (34a, 34b) zum Vorspannen der Kolbenvorrichtung (33a, 33b) in Richtung einer Position umfasst, die eine maximale Ölmenge in der Pumpenkammer (27a, 27b) zulässt.

3. Pumpenmodul nach Anspruch 1 oder 2, wobei das Pumpenmodul (20) ein Rückschlagventil (35) umfasst, das zwischen der Pumpenkammer (27a, 27b) und dem Auslass (30) zum Verhindern einer Strömung vom Auslass (30) zur Pumpenkammer (27a, 27b)angeordnet ist.

4. Pumpenmodul (20) nach einem der Ansprüche 1 bis 3, wobei der Fluidkanal (28) innerhalb des Körpers (21) des Pumpenmoduls (20) angeordnet ist.

5. Pumpenmodul (20) nach einem der vorhergehenden Ansprüche, wobei die Betätigungskammer (31a, 31b) so konfiguriert ist, dass sie Druckluft aufnimmt.

6. Pumpenmodul (20) nach einem der vorhergehenden Ansprüche, wobei das Pumpenmodul (20) mindestens zwei Pumpenkammern (27a, 27b) und Betätigungskammern (31a, 31b) umfasst.

7. Pumpenmodul (20) nach einem der vorhergehenden Ansprüche, wobei der Körper (21) ein einteiliges Teil ist.

8. Pumpenmodul (20) nach einem der vorhergehenden Ansprüche, wobei die Pumpenkammer (27a, 27b) und die Betätigungskammer (31a, 31b) innerhalb des Körpers (21) des Pumpenmoduls (20) angeordnet sind.

9. Pumpenmodul (20) nach einem der vorhergehenden Ansprüche, wobei die Pumpenkammer (27a, 27b) und die Betätigungskammer (31a, 31b) in einem separaten Teilmodul (37a, 37b, 37c, 37d) angeordnet sind, das am Körper (21) des Pumpenmoduls (20) befestigt ist.

10. Kolbenmotor (1), umfassend ein Pumpenmodul (20) nach einem der vorhergehenden Ansprüche.

11. Kolbenmotor (1) nach Anspruch 10, wobei der Motor (1) eine Ölwanne (11) aufweist und das Pumpenmodul (20) an einem Ende der Ölwanne (11) angeordnet ist.

12. Kolbenmotor (1) nach Anspruch 10 oder 11, **dadurch gekennzeichnet, dass** an die zweite Anschlussfläche (23) des Pumpenmoduls (20) eine Rücklaufleitung (17) für Schmieröl von einem Turbolader (5) angeschlossen ist.

13. Kolbenmotor (1) nach einem der Ansprüche 10 bis 12, wobei ein Flansch (38) zwischen dem Pumpenmodul (20) und der Ölwanne (11) angeordnet ist.

## Revendications

1. Module de pompe (20) pour mettre sous pression de l'huile de commande d'un moteur à piston (1) afin de permettre un démarrage à froid noir du moteur (1), le module de pompe (20) comprenant
- un corps (21) ayant une première surface de raccordement (22) faisant face à une première direction et une seconde surface de raccordement (23) faisant face à une seconde direction opposée à la première direction, dans lequel la première surface de raccordement (22) est conçue pour être raccordée à un carter d'huile (11) ou à un réservoir d'huile de lubrification du moteur (1) et la seconde surface de raccordement (23) est conçue pour être raccordée à une conduite d'huile (17) d'un système d'huile de lubrification du moteur (1), le corps (21) comprenant un trou traversant (25), la paroi du trou traversant (25) définissant un canal d'huile (26) pour permettre un écoulement d'huile entre la conduite d'huile (17) et le carter d'huile (11) ou le réservoir d'huile de lubrification,
- une chambre de pompe (27a, 27b) pour mettre sous pression l'huile de commande,
- un canal de fluide (28) pour établir une communication fluidique entre le canal d'huile (26) et la chambre de pompe (27a, 27b) et pour permettre un écoulement depuis le canal d'huile (26) dans la chambre de pompe (27a, 27b),
- un clapet anti-retour (29) qui est agencé entre le canal d'huile (26) et la chambre de pompe (27a, 27b) pour empêcher un écoulement depuis la chambre de pompe (27a, 27b) dans le canal d'huile (26),
- une sortie (30) pour décharger de l'huile de commande sous pression du module de pompe (20),
- une chambre d'actionnement (31a, 31b) qui est coaxiale à la chambre de pompe (27a, 27b),
- une entrée (32) pour introduire un milieu sous pression dans la chambre d'actionnement (31a, 31b), et
- un dispositif à piston (33a, 33b) ayant une première surface de piston (33c, 33e) délimitant la chambre de pompe (27a, 27b) et une seconde surface de piston (33d, 33f) délimitant la chambre d'actionnement (31a, 31b),
dans lequel le module de pompe (20) est conçu pour mettre sous pression l'huile dans la chambre de pompe (27a, 27b) au moyen du mouvement du dispositif à piston (33a, 33b), lorsqu'une pression est appliquée sur la seconde surface de piston (33d, 33f) du dispositif à piston (33a, 33b).

2. Module de pompe selon la revendication 1, dans lequel le module de pompe (20) comprend un ressort (34a, 34b) pour solliciter le dispositif à piston (33a, 33b) vers une position permettant une quantité maximale d'huile dans la chambre de pompe (27a, 27b).

3. Module de pompe selon la revendication 1 ou 2, dans lequel le module de pompe (20) comprend un clapet anti-retour (35) qui est agencé entre la chambre de pompe (27a, 27b) et la sortie (30) pour empêcher un écoulement depuis la sortie (30) vers la chambre de pompe (27a, 27b) .

4. Module de pompe (20) selon l'une quelconque des revendications 1 à 3, dans lequel le canal de fluide (28) est agencé à l'intérieur du corps (21) du module de pompe (20) .

5. Module de pompe (20) selon l'une quelconque des revendications précédentes, dans lequel la chambre d'actionnement (31a, 31b) est conçue pour recevoir de l'air comprimé.

6. Module de pompe (20) selon l'une quelconque des revendications précédentes, dans lequel le module de pompe (20) comprend au moins deux chambres de pompe (27a, 27b) et chambres d'actionnement (31a, 31b).

7. Module de pompe (20) selon l'une quelconque des revendications précédentes, dans lequel le corps (21) est une pièce monobloc.

8. Module de pompe (20) selon l'une quelconque des revendications précédentes, dans lequel la chambre de pompe (27a, 27b) et la chambre d'actionnement (31a, 31b) sont agencées à l'intérieur du corps (21) du module de pompe (20).

9. Module de pompe (20) selon l'une quelconque des revendications précédentes, dans lequel la chambre de pompe (27a, 27b) et la chambre d'actionnement (31a, 31b) sont agencées dans un sous-module séparé (37a, 37b, 37c, 37d) fixé au corps (21) du module de pompe (20).

10. Moteur à piston (1) comprenant un module de pompe (20) selon l'une quelconque des revendications précédentes.

11. Moteur à piston (1) selon la revendication 10, dans lequel le moteur (1) comprend un carter d'huile (11) et le module de pompe (20) est agencé au niveau d'une extrémité du carter d'huile (11).

12. Moteur à piston (1) selon la revendication 10 ou 11, dans lequel une conduite de retour (17) pour de l'huile de lubrification depuis un turbocompresseur (5) est raccordée à la seconde surface de raccordement (23) du module de pompe (20).

13. Moteur à piston (1) selon l'une quelconque des revendications 10 à 12, dans lequel une bride (38) est agencée entre le module de pompe (20) et le carter d'huile (11) .
